(19) Europäisches Patentamt
European Patent Office
Office européen des brevets

(11) **EP 4 685 546 A1**

(12) **EUROPEAN PATENT APPLICATION**

(43) Date of publication:
**28.01.2026 Bulletin 2026/05**

(21) Application number: 24315355.8

(22) Date of filing: **23.07.2024**

(51) International Patent Classification (IPC):
**G02C 7/02** *(2006.01)*

(52) Cooperative Patent Classification (CPC):
**G02C 7/022;** G02B 27/0172; G02C 7/104;
G02C 2202/16; G02C 2202/20; G02C 2202/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Essilor International
94220 Charenton-Le-Pont (FR)**

(72) Inventors:
• **Fermigier, Bruno
94700 MAISONS ALFORT (FR)**
• **Guillot, Matthieu
92130 ISSY LES MOULINEAUX (FR)**
• **Peloux, Marius
91120 PALAISEAU (FR)**
• **Gacoin, Eric
75020 PARIS (FR)**

(74) Representative: **Innovincia
11, avenue des Tilleuls
74200 Thonon-Les-Bains (FR)**

(54) **LENS ELEMENT, EYEWEAR OR HEAD MOUNTABLE DISPLAY**

(57) The invention concerns a lens element (10) intended to be worn in front of an eye of a wearer comprising
- a substrate (11) with a refraction area (16) having a refractive power for correcting an abnormal refraction for said eye of the wearer,
- at least three lenslets (14) located on the front (12F) or rear (12R) face of the substrate (11) of the lens element (10) or being embedded within the substrate (11), a lenslet (14) having a diameter of at least 0,75mm and the optical function of a lenslet (14) is configured to achieve together with the refraction area (16) and/or another associated lenslet (14) at a selected wavelength in the visible spectrum that for an incident plane wave of light rays on one of the at least three lenslets (14), the light-rays at the selected wavelength are focused on the retina of the wearer whereas light-rays at a wavelength different from the selected wavelength are not focused on the retina.

Fig. 2

EP 4 685 546 A1

**Description**

TECHNICAL FIELD

The present disclosure relates to a lens element intended to be worn in front of an eye of a person to suppress / reduce progression or control abnormal refractions of the eye such as myopia or hyperopia. The lens element is in particular an ophthalmic article.

The term "ophthalmic article" is specifically understood to mean a lens, corrective or otherwise, that can be used as spectacle glass, for spectacles for example, particularly eyewear, sunglasses, goggles, visors, head mountable display or the like or a contact lens worn by the user in direct contact with his eye.

BACKGROUND OF THE DISCLOSURE

Myopia of an eye is characterized by the fact that the eye focuses distant objects in front of its retina. Hyperopia of an eye is characterized by the fact that the eye focuses distant objects behind its retina. Myopia is usually corrected using a concave lens and hyperopia is usually corrected using a convex lens.

It has been observed that some individuals when corrected, using conventional single vision optical lenses, in particular children, focus inaccurately when they observe an object which is situated at a short distance away, that is to say, in near vision conditions. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individuals the myopia defect tends to increase over time.

Foveal vision corresponds to viewing conditions for which the image of an object looked at is formed by the eye in the central zone of the retina, called the foveal zone.

Peripheral vision corresponds to the perception of elements of a scene that are offset laterally relative to the object looked at, the images of said elements being formed on the peripheral portion of the retina, away from the foveal zone.

The ophthalmic correction with which an ametropic subject is provided is usually adapted for his foveal vision. However, as is known, the correction has to be reduced for the peripheral vision relative to the correction that is determined for the foveal vision. In particular, studies carried out on monkeys have shown that focusing the light far behind the peripheral retina, even with simultaneous light perfectly focused on the fovea, causes the eye to elongate, elongate and therefore causes a myopia defect to increase.

Therefore, it appears that there is a need for a lens element that would suppress, control or at least slow down progression of abnormal refractions of the eye such as myopia or hyperopia.

WO2019206569 in the name of the applicant proposes solutions by disclosing lens elements having lenslets which show in particular a function of non-focusing an image on the retina of the eye in standard wearing conditions.

The present disclosure aims to propose an alternative to already known state of the art.

SUMMARY OF THE DISCLOSURE

In order to achieve this goal, the present disclosure proposes a lens element intended to be worn in front of an eye of a wearer comprising

- a substrate with a refraction area having a refractive power for correcting an abnormal refraction for said eye of the wearer,
- at least three lenslets located on the front or rear face of the substrate of the lens element or being embedded within the substrate, a lenslet having a diameter of at least 0,75mm and the optical function of a lenslet is configured to achieve together with the refraction area and/or another associated lenslet at a selected wavelength in the visible spectrum that for an incident plane wave of light rays on one of the at least three lenslets, the light-rays at the selected wavelength are focused on the retina of the wearer whereas light-rays at a wavelength different from the selected wavelength are not focused on the retina.

The general concept behind the invention is to use take advantage of longitudinal chromatic aberration in order to achieve for a selected wavelength within the visible spectrum an image which is focused on the retina.

One advantage results in the fact that at the selected wavelength, an accurate vision is provided to the wearer of the lens element whereas for wavelengths which are different from the selected wavelength one, an image would be blurred / not focused which would force the eye to contract and allows to reduce, control or suppress myopia.

One further advantage of myopia control via longitudinal chromatic aberration is that the lens element appears as a standard lens element for any third person looking at the wearer.

Surprisingly, the inventors have observed that a lens element with the above described technical features may induce stimulations on the retina of the wearer which contribute to decrease the visual fatigue of the wearer.

The lens element may present one or several of the following features, alone or in combination :

- the light-rays at a wavelength different from the selected wavelength present a difference in wavelength which is greater than 20nm, in particular 50nm.

- the optical function of the lenslets is achieved at a selected wavelength comprised in a first range of wavelengths between 440-495nm or a second range of wavelengths between 520-600nm, or a third range of wavelength between 625-780nm and wherein light-rays at a wavelength outside the range of wavelengths which comprises the selected wavelength, are not focused on the retina.

- the selected wavelength is comprised in the first range of wavelength and where light-rays comprised in the second or the third range of wavelength would be not focused on the retina of the wearer.

- the selected wavelength is comprised in the third range of wavelength and where light-rays comprised in the first or the second range of wavelength would be not focused on the retina of the wearer.

- the selected wavelength is comprised in the second range of wavelength and where light-rays comprised in the first or the third range of wavelength would be not focused on the retina of the wearer.

- a lenslet presents a luminous transmittance Tv > 90%.

- a lenslet may include a diffractive lenslet, in particular a lenslet based on Fresnel design like a +/- 2rr-Fresnel lenslet or a +/- $\pi$-Fresnel lenslet.

- a lenslet may be designed as a binary lenslet.

- the lenslets are formed by a refractive layer element and by a diffractive layer element assembled together on the substrate, the refractive layer element exhibits a positive refractive optical power at the selected wavelength and the diffractive layer element exhibits a negative diffractive optical power for the selected wavelength.

- the lenslets are formed by a refractive layer element and by a diffractive layer element assembled together on the substrate, the refractive layer element exhibits a negative refractive optical power at the selected wavelength and the diffractive layer element exhibits a positive diffractive optical power for the selected wavelength.

- the optical powers of the refractive layer element and the diffractive layer element respectively compensate each other at the selected wavelength.

- the lenslets are formed by a refractive layer element and by a diffractive layer element assembled together on the substrate, the refractive layer element exhibits at the selected wavelength the same sign of refractive optical power than the diffractive layer element for the selected wavelength.

- the surface covered by the lenslets is at least 20%, in particular at least 30% of the total surface of the substrate of the lens element.

- the lens element exhibits a central zone which is free of lenslets.

- one lenslet is at least contiguous with another lenslet.

- each lenslet is at distance with another lenslet.

- the lenslets are realized by lithograghy, molding, film application or holography.

The invention also relates to an eyewear or a head mountable display bearing a lens element presenting one or several of the above listed features of the lens element.

BRIEF DESCRIPTION OF THE DRAWINGS

Other advantages and features will become apparent upon reading the description of the following figures, among which:

- figure 1 is a schematic front view of a lens element according to the present disclosure,
- figure 2 is a schematic cross-sectional view of the lens element of figure 1,
- figure 3 is a schematic scheme for illustrating longitudinal chromatic aberration,
- figure 4 is a schematic figure for illustrating the general principle taking the example of a doublet $2\pi$ Fresnel lens and a refractive lens as lenslet,
- figure 5 is a schematic figure of a lens element according to the present disclosure taking into account the eye lens and retina of a wearer,
- figure 6 is a simplified image projected on the retina with the help of a lens element according to the present disclosure,
- figure 7A is another example of a schematic figure for illustrating the general principle taking the example of a doublet $2\pi$ Fresnel lens and a refractive lens as lenslet which is similar to figure 4,
- figure 7B is another example of a schematic figure for illustrating the general principle taking the example of a doublet $2\pi$ Fresnel lens and a refractive lens as lenslet which is opposite to figure 4,
- figure 8 is an example of a cross sectional view of a composite lenslet with a refractive lens part and a $2\pi$ Fresnel lens part of opposite curvature for use in a doublet according to the present disclosure, and
- figure 9 is an example of a cross sectional view of a composite lenslet with a refractive lens part and a $\pi$ Fresnel lens part for use in a doublet according to the present disclosure,
- FIGS. 10a to 10c illustrate a binary lens embodiment of the invention,
- figure 11 is a schematic scheme for illustrating longitudinal chromatic aberration according to another embodiment,
- figure 12 is a schematic figure for illustrating the example of a doublet $2\pi$ Fresnel lens and a refractive lens as lenslet according to the embodiment of figure 11, and
- figure 13 is a schematic figure of a lens element according to the present disclosure and the embodiment of figures 11 and 12 taking into account the eye lens and retina of a wearer,

DETAILED DESCRIPTION

On all the figures, the same elements bear the same reference numbers.

The following embodiments are only examples. Although the description refers to one or several embodiments, the invention is not limited to these embodiments. In addition, a feature described in relationship with one embodiment may also concern another embodiment even if this is not mentioned expressively. Simple features of different embodiments may also be combined to provide further realizations.

In the present description, by "front" or "rear" face of a layer or a lens element or surface, reference is made to the propagation of the rays of light towards the eye through the ophthalmic lens when an ophthalmic device bearing the ophthalmic lens is worn on a wearer's face. Thus a "front" face is always that which is farest away to the eye of the user and therefore closest to the field of view and a "rear" face is always that which is closest to the eye of the user.

By "upstream" or "downstream", one refers to the propagation of the rays of light towards the eye. Thus, a first element is disposed upstream of a second element when the light passes through its path towards the eye of the user first through the first element and then through the second element. Conversely, a first element is disposed "downstream" of a second element when the light passes through its path towards the eye of the user first through the second element and then through the first element.

The disclosure relates to a lens element intended to be worn in front of an eye of a wearer.

In the context of the present disclosure, the term "lens element" is to be understood widely as an optical article, more specifically an ophthalmic optical article. Such a lens element can refer to a lens blank, an uncut optical lens, a spectacle optical lens edged to fit a specific spectacle frame, an ophthalmic lens or a contact lens.

Such a lens element according to the present description is intended to be integrated into an eyewear like spectacles or goggles in particular with or without a frame and with branches, a mask or a visor intended to be placed in front of the eyes and forming for example a visual shield.

In other examples, such a lens element is intended to be integrated into a head mountable display ("HMD").

Such a head mountable display may include for example the visual displays in virtual reality (V/R) and augmented reality (A/R) environments. During use, a user can affix the head mountable display to their head to experience the VR and/or AR environment. A head-mountable-display may also a facial-interface system, a strap assembly and an audio subsystems.

A head-mountable display may include any type or form of display device or system that is worn on or about a user's head and displays visual content to the user. Head-mountable displays may display the visual content in any suitable manner, including via a display panel (e.g., an LCD or LED display panel), a projector, a cathode ray tube, an optical mixer, etc.

Head-mountable displays may display content in one or more of various media formats. For example, a head-mountable display may display video, photos, and/or computer-generated imagery (CGI).

HMDs may have numerous practical and leisure applications. Aerospace applications / automobile applications permit a pilot / driver to see control information without taking their eye off the path. Public safety applications include tactical displays of maps. Other application fields include video games, transportation, and/ or telecommunications. HMDs are likely to have broader adoption by the public, if they can effectively incorporate prescriptive correction for a wide variety of users with different prescriptive needs.

HMDs may be designed to be "see through" or as an opaque display.

In the context of the present disclosure, a lenslet is considered as an optical microstructure having physical extension Z (deformation/height) between in particular [$0,1\mu m$-$50\mu m$], and a physical extension X/Y (width/length /diameter) of at least 0,75mm.

Such a lenslet may provide one or several optical functions and according to its configuration, a lenslet provides an optical wavefront modification on its intensity, curvature, or light deviation.

The lenslet may be located on top of a substrate (front and/or rear face) but may also be embedded in such a substrate. For example when the substrate comprises several layers, the lenslet can be part of a specific optical layer.

A hard coat layer may protect the lens element and cover the lenslets and the refraction area.

A lenslet can also be configured to scatter or diffract light, in particular with a scattering or diffraction angle ranging from +/-1° to +/-30°.

A diffractive lenslet for example may have discontinuities such as a discontinuous surface and/or a refractive index profile with discontinuities. A $\pi$-Fresnel lenslet has a phase function '$\psi$'(r) with $\pi$-phase jumps at a nominal wavelength.

More in detail, a diffractive surface such as presenting $\pi$-Fresnel lenslets, can be described mathematically as follows:

$$z = f(x, y) moduloM \text{ (eq. 1)}$$

where

- f(x,y) is a continuous function and M is the step height.

- $M = j\frac{\lambda}{\Delta n}$ ; j being a natural number, A being the wavelength and $\Delta n$ being the difference of the refraction index of the $\pi$ - Fresnel lenslet and air.

As described more in detail here beneath, a lenslet can be a composite lenslet composed of at least a refractive layer and at least a diffractive layer.

In this case, the optical path difference (OPD) can be the sum of the optical path difference of one or more refractive and one or more diffractive layers:

$$OPD = \Delta n\, Z = OPD_{refr} + OPD_{diffr} \text{ (eq. 2)}$$

It should be noted that such refractive and diffractive layers can be on distinct surfaces but may also be combined in only one surface.

Considering a lenslet surface Z=f(x,y) , combining refractive & diffractive layers, the optical path difference OPD can be written as follows

$$OPD = \Delta n\, (Z_{refr} + Z_{diffr}) \quad \text{(eq. 3)}$$

And in a more specific case of a Fresnel lens, $Z_{diffr}$ can be written:

$$Z_{diffr} = Z^0_{diffr} \quad modulo\ (j*\lambda_0\ /\ \Delta n) \quad \text{(eq. 4)}$$

where $Z^0_{diffr}$ is a continuous function and where $\lambda_0$ is the chosen or selected wavelength.

For example, the optical path difference of one microlens, centered at the point $(x_0,y_0)$ can be the sum of the refractive & diffractive layers:.

$$OPD = \Delta n\, Z = C_{refr}\big((x - x_0)^2 + (y - y_0)^2\big) + \big[C_{diffr}\big((x - x_0)^2 + (y - y_0)^2\big)modulo(j * \lambda_0)\big] \quad (eq.\ 5)$$

For the phase, the following equation applies :

$$\varphi(x,y,\lambda) = \frac{2\pi}{\lambda}OPD = \frac{2\pi}{\lambda}\Delta n\{Z_{refr} + Z_{diffr}\} \qquad (eq.\ 6)$$

which leads in case of one lenslet to:

$$\varphi(x,y,\lambda) = \frac{2\pi}{\lambda}OPD = \frac{2\pi}{\lambda}\{C_{refr}((x - x_0)^2 + (y - y_0)^2) + [C_{diffr}((x - x_0)^2 + (y - y_0)^2)mod(j * \lambda_0)]\}$$
$$= \frac{2\pi}{\lambda}C_{refr}((x - x_0)^2 + (y - y_0)^2) + \left[\frac{2\pi}{\lambda}C_{diffr}((x - x_0)^2 + (y - y_0)^2)mod\left(\frac{j*2\pi\lambda_0}{\lambda}\right)\right] \quad (eq.\ 7)$$

The luminous transmittance Tv in ISO standard 13666 is defined as:

$$\tau_v = 100 \times \frac{\int_{380\,nm}^{780\,nm} \tau(\lambda)\cdot V(\lambda)\cdot SD65\lambda(\lambda)\cdot d\lambda}{\int_{380\,nm}^{780\,nm} V(\lambda)\cdot SD65\lambda(\lambda)\cdot d\lambda}\ \%$$

where

$\tau(\lambda)$ is the spectral transmittance of the tinted spectacle lens;
$V(\lambda)$ is the spectral luminous efficiency function for daylight (see ISO/CIE 10527):
$S_{D65\lambda}(\lambda)$ is the spectral distribution of radiation of CIE standard illuminant D 65 (see ISO/CIE 10526).

In the present description, some light rays present the feature to be not focused on the retina of the wearer, which would mean in other terms that those light rays which traverse a lens element and a lenslet, the light rays might be focused upwards (before) or downwards (behind) the retina.

Observation of focused or not focused image or light rays on the retina is understood under wearing conditions of a lens element by a wearer.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

The Cornea to lens distance is the distance along the visual axis of the eye in the primary position (usually taken to be the horizontal) between the cornea and the back surface of the lens; for example equal to 12mm. The Pupil-cornea distance is the distance along the visual axis of the eye between its pupil and cornea; usually equal to 2mm. The CRE to pupil distance is the distance along the visual axis of the eye between its center of rotation (CRE) and cornea; for example equal to 11.5mm.

The CRE to lens distance is the distance along the visual axis of the eye in the primary position (usually taken to be the horizontal) between the CRE of the eye and the back surface of the lens, for example equal to 25.5mm. The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example equal to -8° .

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example equal to 0°.

An example of standard wearing condition may be defined by a pantoscopic angle of -8°, a Cornea to lens distance of 12 mm, a Pupil-cornea distance of 2 mm, a CRE to pupil distance of 11.5 mm, a CRE to lens distance of 25.5 mm and a wrap angle of 0°.

The wearing conditions may be evaluated on a real wearer or be evaluated by standard wearing conditions as set out above.

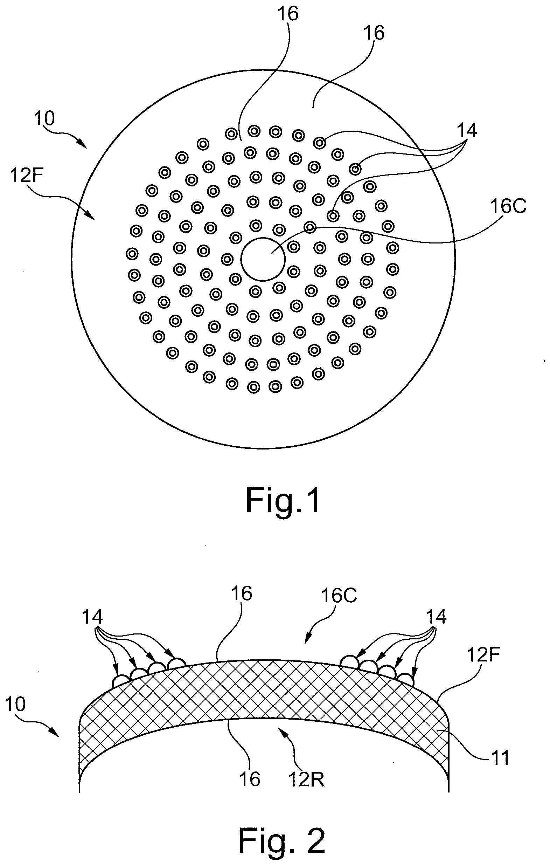

As represented on figures 1 and 2, a lens element 10 according to the disclosure comprises a substrate 11.

The substrate 11 is for example made of a plastic material, for instance a polymer substrate like a thermoplastic plastic material, such as polycarbonates and thermoplastic polyurethanes, in particular made of polyamide (PA), like nylon or a polycarbonate, polyester or TRIVEX(C) (registered trademark) or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates (such as PMMA) and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC) and diethylene glycol bis(allylcarbonate) polymers, in particular substrates made of polycarbonate. As an alternative, a PET or TAC film, or any other suitable material, may be present on the substrate, on either of its surface, for example added by lamination.

Specific examples of substrates suitable to the present invention are those obtained from thermosetting polythiourethane resins, which are marketed by the Mitsui Toatsu Chemicals company as MR series, in particular MR6®, MR7® and MR8® resins. These substrates as well as the monomers used for their preparation are especially described in the patents US 4,689,387, US 4,775,733, US 5,059,673, US 5,087,758 and US 5,191,055..

The substrate 11 presents a front face 12F or front diopter and a rear face 12F or rear diopter which define a refraction area 16 having a refractive power for correcting an abnormal refraction for said eye of a wearer. The substrate surface may be progressive, aspherical or torical.

The lens element 10 further comprises at least three lenslets 14 located in the present example on the front face 12F of substrate 11.

In other examples, the lenslets 14 may be located on the rear face 12F of the substrate 11.

In further examples, the lenslets 14 may be embedded within the substrate 11. In particular, the lenslets 14 may be embedded in a layer of a multilayer substrate, for example when the substrate comprises several layers. The lenslets can be part of a specific optical layer of the substrate 11.

The lenslets 14 can be made with a material having a refractive index which is different from the refractive material forming the substrate 11.

The lenslets may present a luminous transmittance Tv > 90%.

The lenslets 14, in particular when located on the front face 12F or the rear face 12R can be made with a material having a refractive index which is the same or different as the refractive material forming the substrate 11. They can even be made with the same material as the substrate 11.

A lenslet 14 has a diameter of at least 0,75mm.

The lenslets 14 may be aspherical, torical, or even prismatic.

The lenslets 14 are for example realized by lithograghy, molding, film application or holography.

The lenslets 14 are for example in figure 1 and 2 protruding from the front face 12F and can be considered as a plurality of respectively independent island-shaped areas. In this case, each lenslet 14 is at distance with respect to another lenslet 14.

According to another example, one lenslet 14 is at least contiguous with another lenslet 14.

The refraction area 16 can be considered as the part of the substrate 11 where no lenslet 14 is present.

In the present example and as can be seen on figures 1 and 2, the refraction area 16 corresponds to the surface of the front face 12F which is in-between the lenslets 14 and the rear face 12R. In other words, the refractive area 16 is preferably formed as the area other than the areas formed by the plurality of lenslets 14. Thus, the refractive area 16 is the complementary area to the areas occupied by the plurality of lenslets 14.

The refraction area 16 is configured to provide to the wearer in standard wearing conditions, in particular for foveal vision, an optical power based on the prescription of the wearer for correcting an abnormal refraction of said eye of the wearer. The object of the refraction area 16 is to focus incoming parallel light on the retina.

The lens element 10 exhibits a central zone 16C which is free of lenslets 14. The diameter of central zone 16C is for example in the range between 4-15mm.

In some examples, the surface covered by the lenslets 14 is at least 20%, in particular at least 30% of the total surface of the substrate 11 of the lens element 10. The total surface of the substrate is meant to be the surface of the front face 12F or the rear face 12R.

In order to reduce / slow down or even suppress myopia, the lenslets 14 are configured to produce an optical function consisting to achieve together with the refraction area 16 and/or another associated lenslet 14 at a selected wavelength in the visible spectrum that for an incident plane wave of light rays on one of the at least said three lenslets 14, the light-rays at the selected wavelength are focused on the retina of the wearer whereas light-rays at a wavelength different from the selected wavelength are not focused on the retina.

The light-rays at a wavelength different from the selected wavelength present a difference in wavelength which may be greater than 20nm, in particular 50nm.

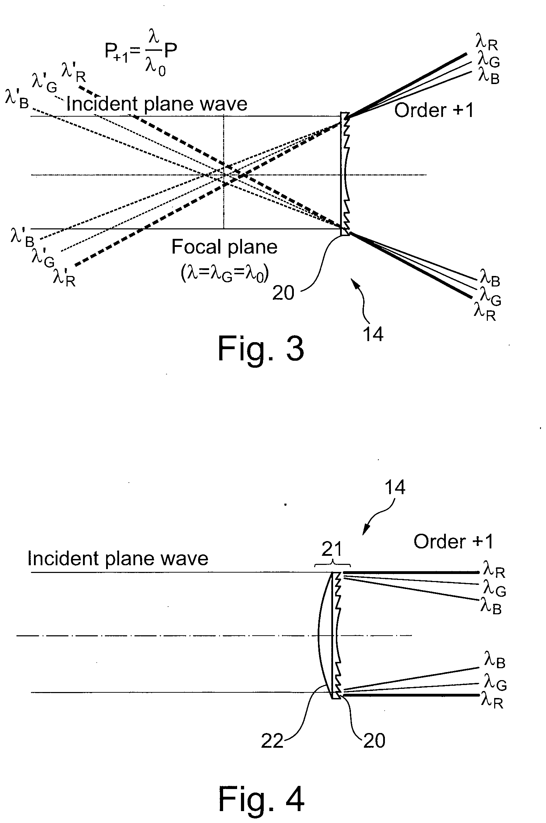

Figure 3 is a schematic figure for illustrating the general principle taking the example of a $2\pi$ Fresnel lens 20 as lenslet 14. In this example, the $2\pi$ Fresnel lens 20 has a negative optical power or dioptric -P <0, P being a positive value and the lens 20 is optimized for green light (for example at 550nm) as a selected wavelength.

In figure 3, an incident planar wave of light rays of visible light (in particular between 340nm-780nm) is impinging the $2\pi$ Fresnel lens 20. Downstream the $2\pi$ Fresnel lens 20 are shown the light paths of three light rays $\lambda_R$, $\lambda_G$, $\lambda_B$ for three rays in the range of the colours red (650nm for ex-ample), green (550nm for example) and blue (450nm for example) and according the $1^{st}$ order diffraction.

Upwards lens 20 is shown the virtual focal plane of lens 20 and in dashed lines the virtual light rays $\lambda_{0R}$, $\lambda_{0G}$, $\lambda_{0B}$. As can be seen in figure 3, the longitudinal chromatic aberration of lens 20 with its specific configuration for a selected green wavelength causes that only virtual green light rays $\lambda_{0G}$, would pass through the focal plane whereas virtual red light rays $\lambda_{0R}$ focus closer to lens 20 and virtual blue light rays $\lambda_{0B}$ focus farer away from lens 20, respectively on both sides of the focal plane.

Figure 4 is a schematic figure for illustrating the general principle taking the example of a combination or doublet 21 of a $2\pi$ Fresnel lens 20 and a refractive lens 22 as lenslet 14. In this example as in figure 3, the $2\pi$ Fresnel lens 20 has a negative optical power or dioptric -P <0, P being a positive value and the lens 20 is optimized for red light (for example 650nm) as a selected wavelength. The refractive lens 22 has a positive optical power P' such that P'= $\lambda_R$ P/$\lambda_0$ where $\lambda_R$ is here the red selected wavelength, P the absolute value of the power of the $2\pi$ Fresnel lens 20 and $\lambda_0$ a wavelength chosen for the optimisation of the $2\pi$ Fresnel lens 20.

Figure 4 shows an incident planar wave of light rays of visible light (in particular between 340nm-780nm) impinging the combination / doublet 21 of the $2\pi$ Fresnel lens 20 and the refractive lens 22.

Downwards the doublet 21 are shown the light paths of three light rays $\lambda_R$, $\lambda_G$, $\lambda_B$ for three rays in the range of the colours red, green and blue and according the $1^{st}$ order diffraction.

As can be seen, the red light ray $\lambda_R$ (650nm for example) is not deviated at all whereas the green $\lambda_G$ (550nm for example) and the blue $\lambda_B$ (450nm for example) light rays are focused to a focal point downwards the doublet 21. Thus at the selected wavelength red at 650nm, the optical powers of the refractive lens 22 and the diffractive lens 20 respectively compensate each other.

Therefore, if the optical function of a doublet 21 (or lenslet 14) is combined with the optical corrective function of the refractive area 16 of lens element 10 and taking into account the eye lens of the wearer, red light ray $\lambda_R$ are focused on the retina whereas for example the blue $\lambda_B$ light rays are focused to a focal point upwards / before the retina causing therefore a blurred blue image on the retina which acts as stimulus for myopia reduction, suppression or control.

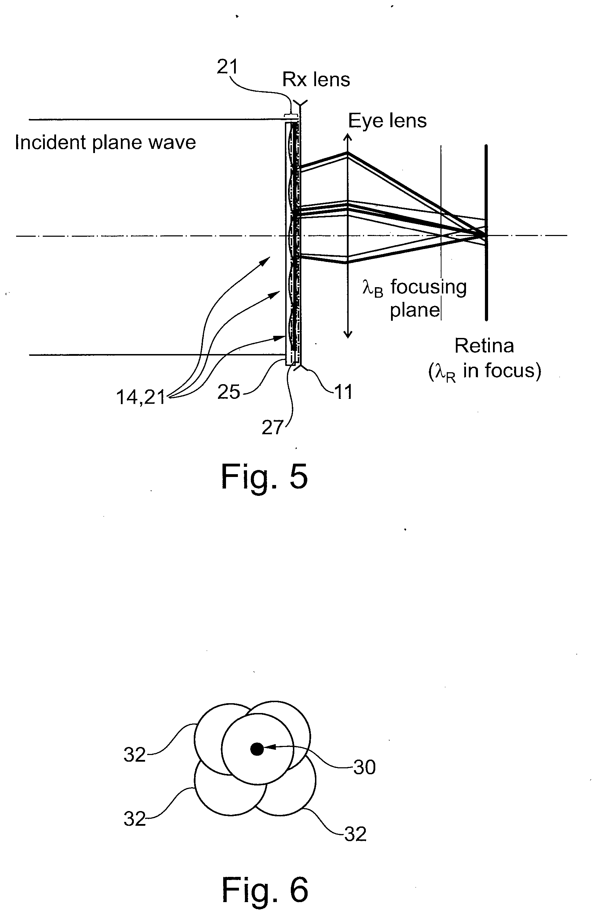

This is shown schematically as example in figure 5. Rx represents the optical power of the refraction area of lens element 10.

Furthermore in figure 5, the lenslets 14 or more specifically the doublets 21 are formed by a refractive layer element 25 (dashed line contour) and by a diffractive layer element 27 (dashed-dotted line contour) assembled together on the substrate 11.

The refractive layer element 25 may exhibit a positive refractive optical power at the selected wavelength and the diffractive layer element 27 may exhibit a negative diffractive optical power for the selected wavelength.

The optical powers of the refractive layer element 25 and the diffractive layer element 27 may respectively compensate each other at the selected wavelength.

Therefore one understands that specific design of the chromatic aberration of a lenslet 14 formed for example by a doublet 21 allows reducing, suppressing or controlling of myopia, in particular by stimulation which tends to reduce the eye axial length elongation.

Figure 6 shows the image that would be received on the retina of a wearer by a lens element 10 with doublets 21 as described for figures 4 and 5 with a selected wavelength in the red (for example 650nm). In the centre, one sees a small dot 30 corresponding to the red focused light whereas around are several "blue" circles 32, each circle corresponding to an image of one doublet 21.

More generally, the optical function of the lenslets 14 is achieved at a selected wavelength comprised in a first range of wavelengths between 440-495nm (blue range) or a second range of wavelengths between 520-600nm (green/yellow range), or a third range (red range) of wavelength between 625-780nm and light-rays at a wavelength outside the range of wavelengths which comprises the selected wavelength, are not focused on the retina.

Thus, if as an example the selected wavelength is comprised in the first range of wavelength (blue range) and light-rays comprised in the second or the third range of wavelength would be focused in front or behind the retina of the wearer.

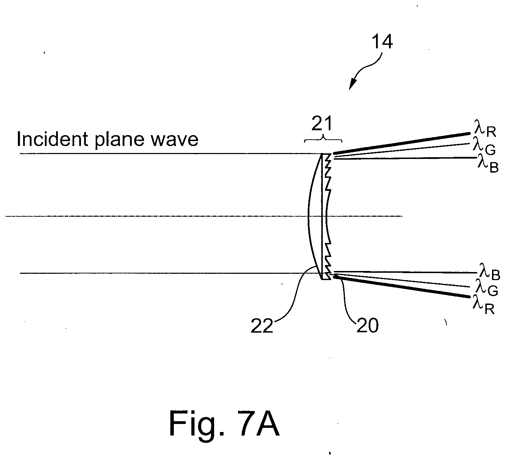

Such an example is shown in figure 7A which is similar to figure 4, is a schematic figure for illustrating according to another example the general principle taking the example of a combination or doublet 21 of a $2\pi$ Fresnel lens 20 and a refractive lens 22 as lenslet 14. In this example as in figure 4, the $2\pi$ Fresnel lens 20 has a negative optical power or dioptric -P <0, P being a positive value and the lens 20 is optimized for blue light (for example 450nm) as a selected wavelength. The refractive lens 22 has a positive optical power P' such that P'= $\lambda_B$ P/$\lambda_0$ where $\lambda_B$ is here the blue selected wavelength, P the absolute value of the power of the $2\pi$ Fresnel lens 20 and $\lambda_0$ a wavelength chosen for the optimisation of the $2\pi$ Fresnel lens 20.

Figure 7A shows an incident planar wave of light rays of visible light (in particular between 340nm-780nm) impinging the combination / doublet 21 of the $2\pi$ Fresnel lens 20 and the refractive lens 22.

Downwards the doublet 21 are shown the light paths of three light rays $\lambda_R$, $\lambda_G$, $\lambda_B$ for three rays in the range of the colours red, green and blue and according to the 1st order diffraction.

As can be seen, the blue light ray $\lambda_B$ (450nm for example) is not deviated at all whereas the green $\lambda_G$ (550nm for example) and the red $\lambda_R$ (650nm for example) light rays are focused to a focal point downwards the doublet 21. Thus at the selected wavelength blue at 450nm, the optical powers of the refractive lens 22 and the diffractive lens 20 respectively compensate each other. In this case the image by the blue light rays is focused on the retina whereas the green and red light rays are not focused on the retina, but in this example the green and red light rays are for example focused in a plane situated downwards or behind the retina.

Similar in case where the selected wavelength is comprised in the third range (red range) of wavelength and light-rays comprised in the first or the second range of wavelength would be focused in front or behind the retina of the wearer. In this case the image by the red light rays is focused on the retina whereas the blue and green light rays are not focused on the retina, but in this example the blue and green light rays are for example focused in a plane situated upwards or before the retina.

Or furthermore in case where the selected wavelength is comprised in the second range (green range) of wavelength and light-rays comprised in the first or the third range of wavelength would be focused in front or behind the retina of the wearer.

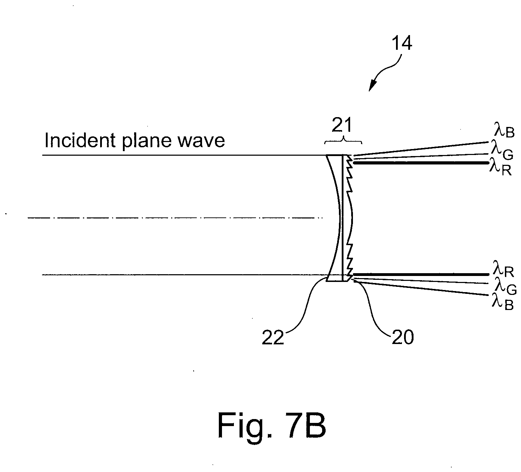

A further example is shown in figure 7B which is opposite to figure 4. Opposite means in this example that the refractive lens 22 is not of semi-convex shape like in figure 4, but of semi-concave shape. Figure 7B is therefore a schematic figure for illustrating according to another example the general principle taking the example of a combination or doublet 21 of a $2\pi$ Fresnel lens 20 and a refractive lens 22 as lenslet 14.

In this opposite example to figure 4, the $2\pi$ Fresnel lens 20 has a positive optical power or dioptric P >0, P being a positive value and the lens 20 is optimized for red light (for example 650nm) as a selected wavelength. The refractive lens 22 has a negative optical power P' such that P'= $\lambda_R$ P/$\lambda_0$ where $\lambda_R$ is here the red selected wavelength, P the absolute value of the power of the $2\pi$ Fresnel lens 20 and $\lambda_0$ a wavelength chosen for the optimisation of the $2\pi$ Fresnel lens 20.

Figure 7B shows an incident planar wave of light rays of visible light (in particular between 340nm-780nm) impinging the combination / doublet 21 of the $2\pi$ Fresnel lens 20 and the refractive lens 22.

Downwards the doublet 21 are shown the light paths of three light rays $\lambda_R$, $\lambda_G$, $\lambda_B$ for three rays in the range of the colours red, green and blue and according to the 1st order diffraction.

As can be seen, the red light ray $\lambda_R$ (650nm for example) is not deviated at all whereas the green $\lambda_G$ (550nm for example) and the red $\lambda_B$ (450nm for example) light rays are diverging according to a focal point upwards the doublet 21. Thus at the selected wavelength red at 650nm, the optical powers of the refractive lens 22 and the diffractive lens 20 respectively compensate each other.

In this case the image by the red light rays is focused on the retina whereas the blue and green light rays are not focused on the retina, but in this example the blue and green light rays are for example focused in a plane situated downwards or behind the retina.

Similar in case where the selected wavelength is comprised in the first range (blue range) of wavelength and light-rays comprised in the second or the third range of wavelength would be focused in front or behind the retina of the wearer.

Or furthermore in case where the selected wavelength is comprised in the second range (green range) of wavelength and light-rays comprised in the first or the third range of wavelength would be focused in front or behind the retina of the wearer.

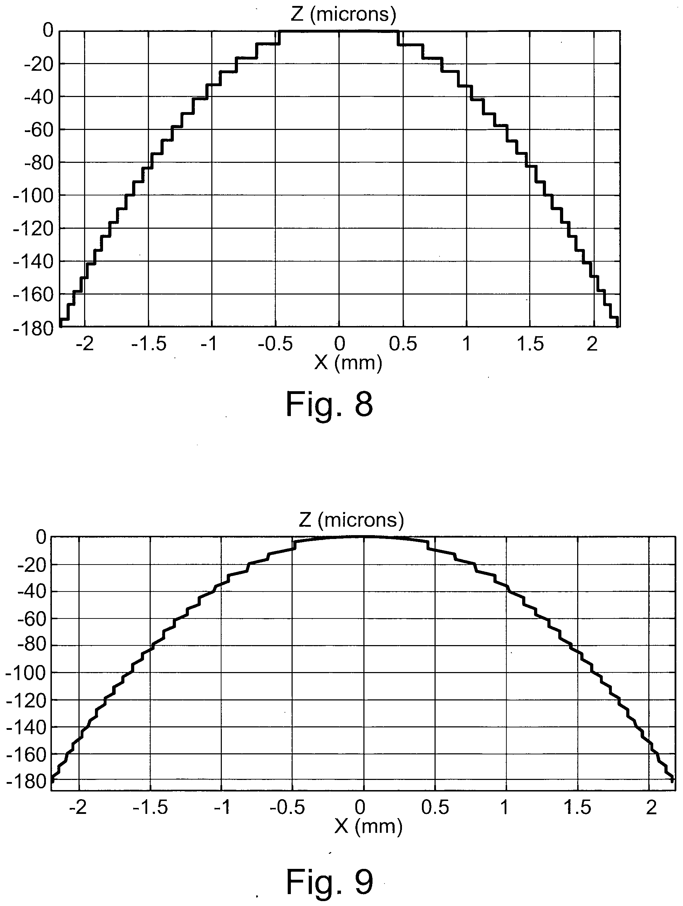

Figure 8 shows a cross sectional view of an example of a surface Z=f(x,y) combining refractive and diffractive layers forming a lens 20 as described schematically with regard to figure 3 which is optimized at in the red range 650nm and having a diffractive optical power of "-6D" The diameter of the lenslet may be 2mm (so less than shown in figure 7) and the height with respect to the refractive area may be 35$\mu$m.

In this exemplary case, the phase for a lenslet in relationship with equation 7 would be given by $C_{diffr} = -C_{refr}$ and j=1 and one would obtain the sum of a refractive layer and a classical 2$\pi$-Fresnel layer (for the reference or selected wavelength $\lambda_0$). In this case the optical power at the selected wavelength $\lambda_0$ would be zero.

Figure 9 is a similar cross sectional view as figure 7, but a surface Z=f(x,y) combining refractive & diffractive layers forming a lens 20 which is optimized at in the red range 650nm and having a diffractive optical power of "-6D". One of the differences with figure 7 is that the steps are not flat as in figure 7, but curved.

More specifically in this embodiment, the phase for a lenslet in relationship with equation 7 would be given by $C_{diffr} = -C_{refr}/2$ and j=1/2, and one would obtain the sum of a refractive layer and a $\pi$-Fresnel layer (for the reference wavelength $\lambda_0$).

The inventors have observed that in this case a supplementary signal in front of the retina creating multiples images with balanced energy in red between focus on the retina and defocus at +6D in front of the retina can be created.

More generally, a lenslet 14 may be designed with the necessary dioptre for a wearer and as already stated above, the phase for a lenslet in relationship with equation 7 would be given by $C_{diffr} = -C_{refr}/2$ and j=1/2, and one would obtain the sum of a refractive layer and a $\pi$-Fresnel layer (for the reference wavelength $\lambda_0$).

As described above, a lenslet 14 may include a diffractive lenslet, in particular a lenslet based on Fresnel design like a +/- 2rr-Fresnel lenslet or a +/- rr-Fresnel lenslet .

According to another embodiment, it is also possible to use a lenslet based on binary lenslet design structure.

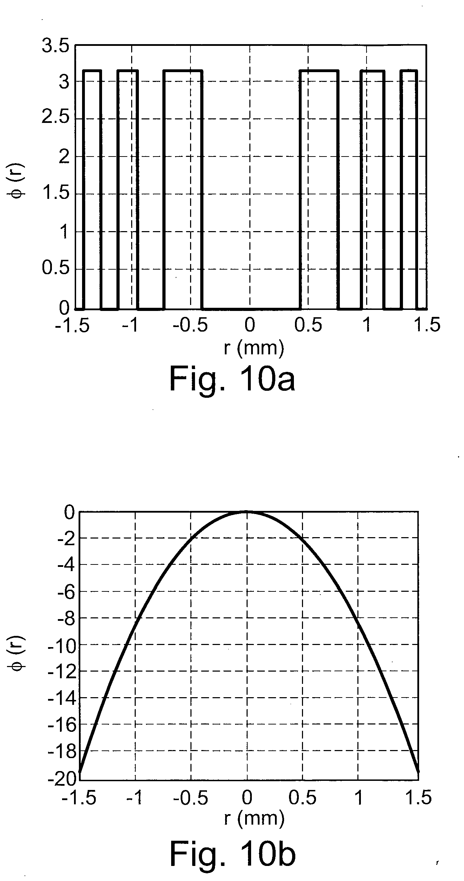

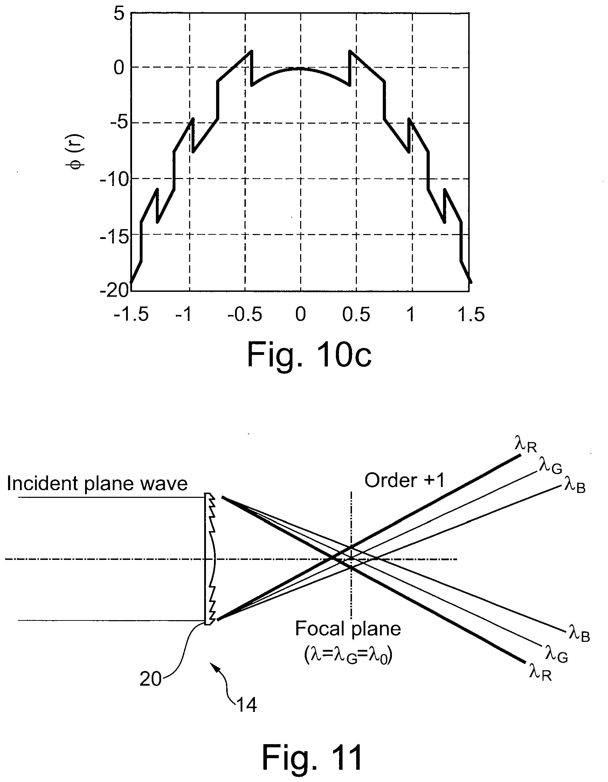

For example, a lenslet binary structure, as represented in FIG. 10a, displays mainly two dioptric powers, denoted -P/2 and P/2. When associated to a refractive structure as shown in FIG. 10b, whose dioptric power is P/2, the final structure represented in FIG. 10c has dioptric powers 0 $\delta$ and P. The illustrated case is associated to P=3 $\delta$.

In the case of binary lenslets 14, two optical main signals are created, in order +/-1 (for + and -P values). Each lenslet 14 exhibits a specific individual LCA, but the image formed by several lenslets 14, the refractive structure and the eye lens on the retina of the wearer does not exhibit an LCA, but a complex optical signal of micro images.

The addition of an adapted refractive +P' value, will allow to create an additional optical signal (micro-images, blurred optical signal) in front of the retina that is not focused on the retina and contributing therefore to reduce, control or suppress myopia.

According to a further embodiment, the eye longitudinal chromatic aberration (eye LCA) is also taken into account and managed. The basic idea here is to design lenslets which manage differently the eye LCA (which is classically present around 2.5D between red and blue) on the retina, by reducing, inverting or compensating the chromatism around the retina.

For example one may use a 2Pi-Fresnel lenslet 14 with a chosen positive power "+P" adapted for the wearer and which may be optimized for example for 550nm. This "P" value will be proportional to the amplitude of chromatism Blue/Red created by the lenslet (if absolute P value increases, then vision LCA amplitude created by the lenslet 14, increase). As here a positive 2Pi-Fresnel lenslet "+P" has been chosen, the LCA of the lenslet 14 would inverse classical eye LCA, with red converging here before blue. This allows to decrease, compensate or inverse eye LCA. The ability to simply decrease, or compensate, or inverse eye LCA will directly depend then to the value "P" of this 2Pi-Fresnel lenslet.

Then a refractive negative power value is added to the diffractive lenslet 14, which is around absolute value of P in order to simply "translate" the green chromatic optical signal on the retina, but without changing the sign of the chromatism.

Thus, an optical signal is created around the retina with red wavelength focusing before blue with the lenslet, and so reducing, compensating or inverting the eye LCA on the retina. By using an array of these lenslets according this specific embodiment, a homogeneous image is created focusing in green on the retina (usable for myopia control and for good vision) and multiple images in other wavelengths non focusing in front and behind the retina (usable for myopia control).

Figure 11 is opposite to figure 3 and shows a single 2$\pi$-Fresnel lenslet 20 for the present example where the selected wavelength $\lambda_0 = \lambda_G$, and P>0 and $P_{+1} = \lambda / \lambda_0$ P.

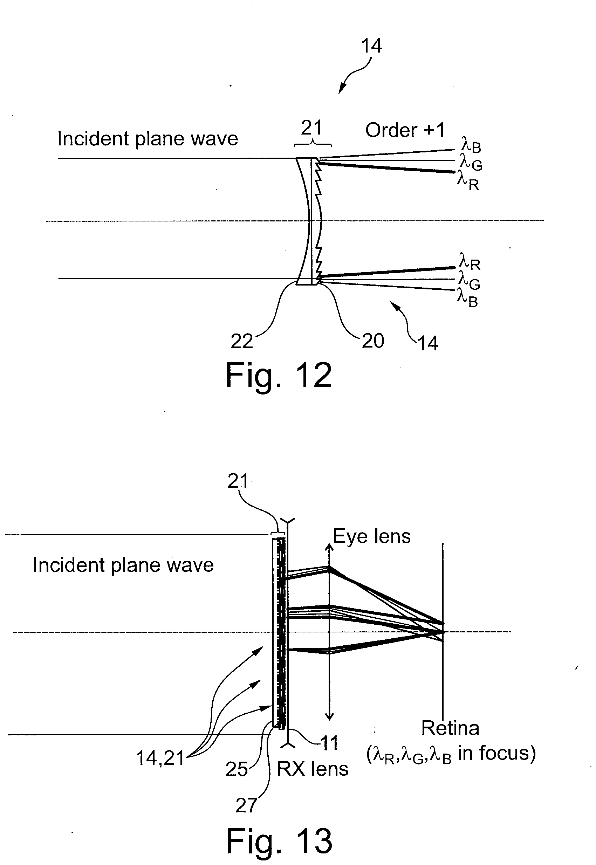

Figure 12 is similar to figure 4 and is a schematic figure for illustrating the general principle taking the example of a combination or doublet 21 of a single 2$\pi$ Fresnel lens 20 of figure 11 and a refractive lens 22 as lenslet 14.

In this case there is a single 2$\pi$-Fresnel lenslet 20 for the present example with the selected wavelength $\lambda_0 = \lambda_G$, and P>0 and $P_{+1} = \lambda / \lambda_0$ P and a refractive lens 22 with P'=-P<0 and $P_{+1}(\lambda_B) - P_{+1}(\lambda_R) = P_{eye}(\lambda_R) - P_{eye}(\lambda_B)$.

Figure 13 is similar to figure 5 and shows the combination of the optical function of a doublet 21 (or lenslet 14) with the optical corrective function of the refractive area 16 of lens element 10 and taking into account the eye lens of the wearer. In this specific example, red light ray $\lambda_R$ are focused on the retina as well as the blue light rays $\lambda_B$ and the green light rays $\lambda_G$. In this case, the lenslets 14 compensate the eye LCA.

Rx represents the optical power of the refraction area of lens element 10.

The lenslets 14 or more specifically the doublets 21 are formed by a refractive layer element 25 (dashed line contour) and by a diffractive layer element 27 (dashed-dotted line contour) assembled together on the substrate 11.

**Claims**

1. A lens element (10) intended to be worn in front of an eye of a wearer comprising

   - a substrate (11) with a refraction area (16) having a refractive power for correcting an abnormal refraction for said eye of the wearer,
   - at least three lenslets (14) located on the front (12F) or rear (12R) face of the substrate (11) of the lens element (10) or being embedded within the substrate (11), a lenslet (14) having a diameter of at least 0,75mm and the optical function of a lenslet (14) is configured to achieve together with the refraction area (16) and/or another associated lenslet (14) at a selected wavelength in the visible spectrum that for an incident plane wave of light rays on one of the at least three lenslets (14), the light-rays at the selected wavelength are focused on the retina of the wearer whereas light-rays at a wavelength different from the selected wavelength are not focused on the retina.

2. A lens element according to claim 1, wherein the light-rays at a wavelength different from the selected wavelength present a difference in wavelength which is greater than 20nm, in particular 50nm.

3. A lens element according to claim 1 or 2, wherein the optical function of the lenslets (14) is achieved at a selected wavelength comprised in a first range of wavelengths between 440-495nm or a second range of wavelengths between 520-600nm, or a third range of wavelength between 625-780nm and wherein light-rays at a wavelength outside the range of wavelengths which comprises the selected wavelength, are not focused on the retina.

4. Lens element according to any of claims 1 to 3 wherein the selected wavelength is comprised in the first range of wavelength and where light-rays comprised in the second or the third range of wavelength would be not focused on the retina of the wearer.

5. Lens element according to any of claims 1 to 3 wherein the selected wavelength is comprised in the third range of wavelength and where light-rays comprised in the first or the second range of wavelength would be not focused on the retina of the wearer.

6. Lens element according to any of claims 1 to 3 wherein the selected wavelength is comprised in the second range of wavelength and where light-rays comprised in the first or the third range of wavelength would be not focused on the retina of the wearer.

7. Lens element according to any of claims 1 to 6, wherein a lenslet presents a luminous transmittance $T_v > 90\%$.

8. Lens element according to any of claims 1-7, wherein the lenslets (14) are formed by a refractive layer element (25) and by a diffractive layer element (27) assembled together on the substrate (11), the refractive layer element (25) exhibits a positive refractive optical power at the selected wavelength and the diffractive layer element (27) exhibits a negative diffractive optical power for the selected wavelength.

9. Lens element according to any of claims 1-7, wherein the lenslets (14) are formed by a refractive layer element (25) and by a diffractive layer element (27) assembled together on the substrate (11), the refractive layer element (25) exhibits a negative refractive optical power at the selected wavelength and the diffractive layer element (27) exhibits a positive diffractive optical power for the selected wavelength.

10. Lens element according to claim 8 or 9, wherein the optical powers of the refractive layer element (25) and the diffractive layer element (27) respectively compensate each other at the selected wavelength.

11. Lens element according to any of claims 1-7, wherein the lenslets (14) are formed by a refractive layer element (25) and by a diffractive layer element (27) assembled together on the substrate (11), the refractive layer element (25) exhibits at the selected wavelength the same sign of refractive optical power than the diffractive layer element (27) for the selected wavelength.

12. Lens element according to any of claims 1 to 11, wherein the surface covered by the lenslets is at least 20%, in particular at least 30% of the total surface of the substrate of the lens element.

13. Lens element according to any of claims 1 to 12, wherein the lens element (10) exhibits a central zone (16C) which is free of lenslets (14).

14. Eyewear comprising a lens element (10) intended to be worn in front of an eye of a wearer comprising

- a substrate (11) with a refraction area (16) having a refractive power for correcting an abnormal refraction for said eye of the wearer,
- at least three lenslets (14) located on the front (12F) or rear (12R) face of the substrate (11) of the lens element (10) or being embedded within the substrate (11), a lenslet (14) having a diameter of at least 0,75mm and the optical function of a lenslet (14) is configured to achieve together with the refraction area (16) and/or another associated lenslet (14) at a selected wavelength in the visible spectrum that for an incident plane wave of light rays on one of the at least three lenslets (14), the light-rays at the selected wavelength are focused on the retina of the wearer whereas light-rays at a wavelength different from the selected wavelength are not focused on the retina.

15. Head mountable display comprising a lens element (10) intended to be worn in front of an eye of a wearer comprising

- a substrate (11) with a refraction area (16) having a refractive power for correcting an abnormal refraction for said eye of the wearer,
- at least three lenslets (14) located on the front (12F) or rear (12R) face of the substrate (11) of the lens element (10) or being embedded within the substrate (11), a lenslet (14) having a diameter of at least 0,75mm and the optical function of a lenslet (14) is configured to achieve together with the refraction area (16) and/or another associated lenslet (14) at a selected wavelength in the visible spectrum that for an incident plane wave of light rays on one of the at least three lenslets (14), the light-rays at the selected wavelength are focused on the retina of the wearer whereas light-rays at a wavelength different from the selected wavelength are not focused on the retina.

Fig.1

Fig. 2

$$P_{+1} = \frac{\lambda}{\lambda_0}P$$

Fig. 3

Fig. 4

Fig. 5

Fig. 6

14

21

Incident plane wave

$\lambda_R$
$\lambda_G$
$\lambda_B$

$\lambda_B$
$\lambda_G$
$\lambda_R$

22        20

# Fig. 7A

Fig. 7B

Fig. 8

Fig. 9

Fig. 10a

Fig. 10b

Fig. 10c

Fig. 11

Fig. 12

Fig. 13

Europäisches
Patentamt
European
Patent Office
Office européen
des brevets

**EUROPEAN SEARCH REPORT**

**Application Number**

**EP 24 31 5355**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/080750 A1 (GUILLOT MATTHIEU [FR] ET AL) 18 March 2021 (2021-03-18) * paragraph [0006] - paragraph [0126]; figures 1-7c * | 1-15 | INV. G02C7/02 |
| X | US 2020/073147 A1 (BAKARAJU RAVI CHANDRA [AU] ET AL) 5 March 2020 (2020-03-05) * figures 36, 37; examples 23, 24 * | 1-15 | |
| X | WO 2023/111280 A1 (ESSILOR INT [FR]) 22 June 2023 (2023-06-22) * p. 20, l. 22 to p. 21, l. 6; figures 12, 13, 14 * | 1-15 | |
| A | WO 2022/039996 A1 (X DEV LLC [US]) 24 February 2022 (2022-02-24) * the whole document * | 1-15 | |
| A | VERKICHARLA PAVAN K ET AL: "Eye shape and retinal shape, and their relation to peripheral refraction", OPHTHALMIC AND PHYSIOLOGICAL OPTICS., vol. 32, no. 3, 1 May 2012 (2012-05-01), pages 184-199, XP093230644, GB ISSN: 0275-5408, DOI: 10.1111/j.1475-1313.2012.00906.x Retrieved from the Internet: URL:https://onlinelibrary.wiley.com/doi/pd fdirect/10.1111/j.1475-1313.2012.00906.x> * the whole document * | 1-15 | **TECHNICAL FIELDS SEARCHED (IPC)** G02C G02B |

The present search report has been drawn up for all claims

| Place of search | Date of completion of the search | Examiner |
|---|---|---|
| Munich | 4 December 2024 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5355

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | | Publication date | Patent family member(s) | | Publication date |
|---|---|---|---|---|---|
| US 2021080750 | A1 | 18-03-2021 | BR | 112020021810 A2 | 23-02-2021 |
| | | | CA | 3098241 A1 | 31-10-2019 |
| | | | CN | 112437897 A | 02-03-2021 |
| | | | CO | 2020013418 A2 | 18-01-2021 |
| | | | EP | 3785072 A1 | 03-03-2021 |
| | | | EP | 4242735 A2 | 13-09-2023 |
| | | | ES | 2973504 T3 | 20-06-2024 |
| | | | HU | E065623 T2 | 28-06-2024 |
| | | | JP | 7555823 B2 | 25-09-2024 |
| | | | JP | 2021522549 A | 30-08-2021 |
| | | | JP | 2024100841 A | 26-07-2024 |
| | | | KR | 20210002505 A | 08-01-2021 |
| | | | PL | 3785072 T3 | 13-05-2024 |
| | | | SG | 11202010551T A | 27-11-2020 |
| | | | US | 2021080750 A1 | 18-03-2021 |
| | | | WO | 2019206569 A1 | 31-10-2019 |
| US 2020073147 | A1 | 05-03-2020 | AU | 2017351635 A1 | 23-05-2019 |
| | | | AU | 2022283726 A1 | 02-02-2023 |
| | | | CN | 110226118 A | 10-09-2019 |
| | | | CN | 114637129 A | 17-06-2022 |
| | | | EP | 3532891 A1 | 04-09-2019 |
| | | | JP | 7308749 B2 | 14-07-2023 |
| | | | JP | 2020500328 A | 09-01-2020 |
| | | | JP | 2023134558 A | 27-09-2023 |
| | | | KR | 20190076005 A | 01-07-2019 |
| | | | SG | 10202107685Y A | 30-08-2021 |
| | | | SG | 11201903710Q A | 30-05-2019 |
| | | | US | 2020073147 A1 | 05-03-2020 |
| | | | US | 2023034749 A1 | 02-02-2023 |
| | | | US | 2023039493 A1 | 09-02-2023 |
| | | | US | 2024201518 A1 | 20-06-2024 |
| | | | WO | 2018076057 A1 | 03-05-2018 |
| WO 2023111280 | A1 | 22-06-2023 | CN | 118284840 A | 02-07-2024 |
| | | | EP | 4449191 A1 | 23-10-2024 |
| | | | KR | 20240122747 A | 13-08-2024 |
| | | | WO | 2023111280 A1 | 22-06-2023 |
| WO 2022039996 | A1 | 24-02-2022 | US | 2022057651 A1 | 24-02-2022 |
| | | | WO | 2022039996 A1 | 24-02-2022 |

EPO FORM P0459

For more details about this annex : see Official Journal of the European Patent Office, No. 12/82

**EP 4 685 546 A1**

**REFERENCES CITED IN THE DESCRIPTION**

**Patent documents cited in the description**

- WO 2019206569 A
- US 4689387 A
- US 4775733 A
- US 5059673 A
- US 5087758 A
- US 5191055 A